# EUROPEAN PATENT APPLICATION

(11) **EP 2 015 138 A1**
(43) Date of publication of application: **14.01.2009**
(21) Application number: 08252101.4
(22) Date of filing: 18.06.2008
(51) Int. Cl.: G03B 21/28

(54) **Display device**

(30) Priority: 19.06.2007 JP 2007161004
(71) Applicant: Seiko Epson Corporation, Shinjuku-ku, Tokyo 163-0811 (JP)
(72) Inventor: Hiroshi Midorikawa c/o Seiko Epson Corportion, Nagano-en,Tokyo 392-8502 (JP)
(74) Representative: Cloughley, Peter Andrew

(57) **Abstract**

A display device includes a screen unit having a screen and a projection section that projects an image light. An arm section is attached to the screen unit so as to protrude therefrom. A reflection unit is attached to the arm section, and has a a reflection mirror that reflects the image light projected by the projection section toward the screen.

## Description

The present invention relates to a display device that performs image display by projecting image lights onto a screen.

In conference rooms and classrooms, for example, projectors are used for projecting image lights onto a screen. Using such a projector requires a space large enough for placement of both the screen and the projector. Generally, the screen is placed to be substantially vertical, and the projector is placed at a place away from the screen. With such a layout, if a presenter stands between the projector and the screen, the image lights coming from the projector are cut off. Also for presentation participants viewing images from the rear of the projector, the projector gets in their sights, thereby preventing viewing of entire images projected on the screen.

In consideration thereof, there is an all-in-one reflective projector system which can be placed in a small space, proposed to configure a projector and a screen in a piece for the purpose of not blocking image viewing by the presenter or the projector itself (an example includes Patent Document 1 (Japanese Patent No. 3864051). In this system, an arm (movable arm) is coupled to the screen (reflective projection screen) at an upper end portion thereof to be protruded from the screen in the substantially vertical direction, and the arm is provided thereon with a projection section (reflective projection head) for enlarging projection of image lights. With such a system, the image lights are directed to the screen located diagonally below the projection section for image display.

With the all-in-one reflective projector system of Patent Document 1, however, there is a possibility of not being able to offer satisfactory safety levels. This is because the projection section is heavy in weight due to a plurality of lenses provided for enlarging projection of image lights, thereby resulting in poor weight balance when the screen is placed to be substantially vertical. Moreover, the heavy load is imposed on both the portion where the screen and the arm are coupled together, and the arm itself. This resultantly required the system to be solid, thereby causing the size and weight increase of the system.

An advantage of some aspects of the invention is to solve at least a part of the problems mentioned above.

A first aspect of the invention is to provide a display device includes a screen unit that is provided with a projection section that enlarges and projects an image light, and a screen. An arm section is attached to the screen unit to be protruded therefrom. A reflection unit is attached to the arm section, and is provided with a reflection mirror that reflects the image light projected by the projection section toward the screen.

With this configuration, the projection section is provided to the screen unit so that, for placement of the screen unit, the arm section is reduced in weight compared with the case where the arm section includes the projection section. With the lighter arm section as such, the weight balance is not lost as easily, and may provide display device with satisfactory stability.

In a second aspect of the invention, in the display device of the first aspect above, preferably, the reflection unit is configured to be changeable in a direction of reflecting the image light.

With this configuration, the reflection unit can be changed in a direction of reflecting image lights, thereby allowing image display at various positions on the screen. Note here that if the reflection unit is so configured as to be able to reflect image lights toward the outside of the screen, image projection may be allowed not only onto the screen but also onto room walls and desks, for example. For this purpose, it may also be possible to move the reflection section so that it does not reflect or impede light from the projection section.

In a third aspect of the invention, in the display device of the second aspect above, preferably, an image correction section is provided for correcting distortion of an image displayed on the screen.

With this configuration, this display device is provided with the image correction section that corrects any distortion of images, thereby being able to display distortion-suppressed images with whatever reflection direction.

In a fourth aspect of the invention, in the display device of the third aspect above, preferably, the image correction section corrects the distortion of the image in conjunction with a change of the direction of reflection made in the reflection unit.

With this configuration, the image correction section corrects any distortion of images in conjunction with any change made for the reflection direction of the reflection unit. Accordingly, users can view distortion-free images with no need for operation for distortion correction.

In a fifth aspect of the invention, in the display device of the first aspect above, preferably, the arm section is configured to adjustably extend or contract to allow a change of protrusion degree with respect to the screen.

With this configuration, the arm section is so configured as to be adjustably extended or contracted so that the distance between the screen and the reflection unit can be changed. This accordingly enables to change the distance of an optical path from the projection section to the screen, i.e., projection distance, so that the images can be changed in size.

In a sixth aspect of the invention, in the display device of the first aspect above, preferably, the reflection mirror has a reflection surface of convex shape.

With this configuration, because the reflection mirror has a reflection surface of convex shape, images can be increased in size to a further degree compared with a case with any reflection mirror having a flat reflection surface. Accordingly, if with images of a size, the projection distance can be reduced, and thus the arm section can be reduced in length so that the protrusion degree of the arm section can be suppressed with respect to the screen. If the projection distance remains the same with images of a size, the magnification of the projection section can be lowered, thereby achieving the simplification of the lens configuration and the reduction of the lens size.

In a seventh aspect of the invention, in any one of the above display devices , preferably, the screen is a white board that allows pen-based writing and erasing of the writing.

With this configuration, because the screen is a white board that allows pen-based writing and erasing of the writing, in addition to image display thereon by image projection, any details of conferences and meetings can be written thereon.

In an eighth aspect of the invention, in the display device of the seventh aspect above, preferably, the screen unit is provided with a reading section that reads a written image written on the screen, and an output section that outputs the image read by the reading section.

With this configuration, the screen unit is provided with the reading section that reads a written image written on the screen, and the output section that outputs the image read by the reading section. Accordingly, any written images can be stored with no need for copying thereof.

In a ninth aspect of the invention, in the display device of the above aspects, preferably, the arm section is attached with an image-capture section that can capture an image of the screen, and the screen unit is provided with an output section that outputs the image captured by the image-capture section.

With this configuration, the arm section is attached with the image-capture section that can capture an image of the screen, and the screen unit is provided with an output section that outputs the image captured by the image-capture section. This accordingly enables to store any written images together with images displayed on the screen.

In a tenth aspect of the invention, in the display device of the eighth or ninth aspect above, preferably, the output section is provided with a printing section that prints the captured image on paper.

With this configuration, the output section is provided with the printing section. This accordingly enables to store any images written on the screen after printing.

In an eleventh aspect of the invention, in the display device of the above aspects, preferably, the output section is provided with an interface section that can be connected to an external device.

With this configuration, the output section is provided with the interface section. This accordingly enables to transfer any images written on the screen to an external device such as PC (Personal Computer). As such, the application purposes can be extended for image storage and image display to a large number of people, for example.

Embodiments of the invention will be described by way of example only with reference to the accompanying drawings, wherein like numbers reference like elements.

FIG. 1 is a perspective view of a display device of a first embodiment, viewed from the upper front surface thereof.

FIG. 2 is a block diagram for illustrating the schematic configuration of the display device of the first embodiment.

FIG. 3 is a side view of the display device of the first embodiment.

FIG. 4 is a perspective view of a tip end portion of a movable section and a reflection unit, viewed from above thereof.

FIG. 5 is a side view of the display device of the first embodiment.

FIG. 6 is a front view of a screen.

FIGS. 7A to 7C are each a plan view of the display device, viewed from the top side thereof.

FIG. 8 is a front view of the screen of FIGS. 7A to 7C.

FIG. 9 is a block diagram for illustrating the schematic configuration of a display device of a second embodiment.

FIG. 10 is an outer view of the display device of the second embodiment.

FIG. 11 is a block diagram for illustrating the schematic configuration of a display device of a third embodiment.

FIG. 12 is a schematic diagram for comparison in terms of an optical path for reflection of image lights between a reflection mirror having a flat reflection surface and another reflection mirror having a concave reflection surface.

### First Embodiment

In the below, a display device of a first embodiment is described by referring to the accompanying drawings.

The display device of this embodiment is of a type that displays images by projecting image lights from a projection section onto a screen.

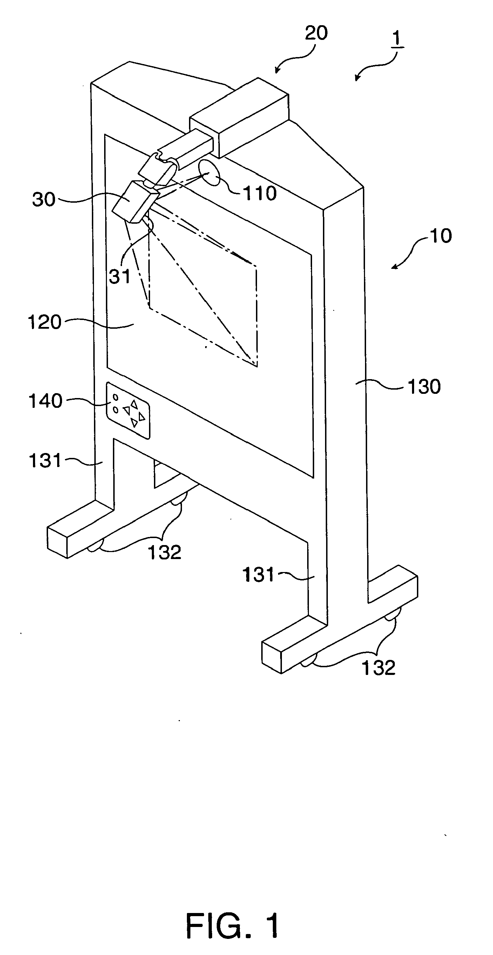

FIG. 1 is a diagram showing the outer appearance of the display device of this embodiment, i.e., a perspective view of the display device viewed from the upper front surface side.

As shown in FIG. 1, a display device 1 is configured to include a screen unit 10, an arm section 20, and a reflection unit 30. The screen unit 10 is configured to include a screen 120 and a projection section 110. The screen 120 is retained by a chassis 130, and is in the shape of square when it is viewed from the front surface side. The projection section 110 is housed in the chassis 130 at its substantially upper center portion. Above the projection section 110, the arm section 20 is so attached as to be protruded from the screen unit 10, and at the tip end of the arm section 20, the reflection unit 30 provided with a reflection mirror 31 is attached. The projection section 110 projects image lights from an aperture portion formed to the front surface of the chassis 130 toward the reflection unit 30. The reflection unit 30 reflects the image lights toward the screen 120 for image display on the screen 120.

The reflection unit 30 can be changed in reflection direction for image lights, and with such a change of reflection direction, images to be displayed on the screen 120 can be changed in position in the vertical and lateral directions. Note here that the chassis 130 is formed at its lower portion with two leg sections 131, and below these leg sections 131, rollers 132 are attached so that the display device 1 can be freely moved for placement.

Described next is the schematic configuration of the display device 1.

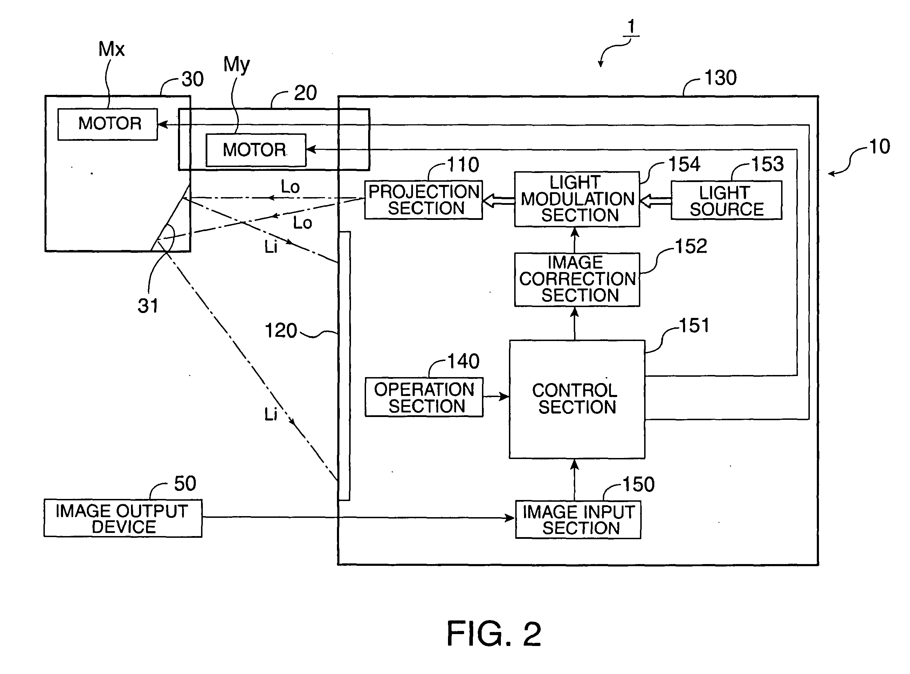

FIG. 2 is a block diagram for illustrating the schematic configuration of the display device 1.

As shown in FIG. 2, the screen unit 10 is configured to include an operation section 140, an image input section 150, a control section 151, an image correction section 152, a light source 153, a light modulation section 154, the projection section 110, the screen 120, and the chassis 130.

The operation section 140 is provided with a plurality of keys for making various settings to the display device 1. The keys include a power key for turning on/off the power, up and down keys for an operation of changing the image position in the vertical direction, right and left keys for an operation of changing the image position in the lateral direction, and others.

The image input section 150 is configured to include a connection terminal, which is provided for a connection, via a cable, with an external image output device 50 such as PC (Personal Computer) and DVD (Digital Versatile Disc) reproduction device. The image input section 150 forwards an image signal coming from the image output device 50 to the control section 151.

The control section 151 generates a display image signal by processing the image signal provided by the image input section 150, and forwards the resulting signal to the image correction section 152. When the up and down keys or the right and left keys are operated in the operation section 140, in response to whichever key is operated, the control section 151 performs control to change the reflection direction for the image lights.

With respect to the display image signal provided by the control section 151, the image correction section 152 performs correction of image distortion caused by any position change made to the images. The display image signal after such a correction is forwarded to the light modulation section 154.

The light source 153 is configured by an ultra-high-pressure mercury lamp, for example, and emits luminous fluxes.

The light modulation section 154 is configured by a liquid crystal panel, for example, and has a rectangular-shaped pixel area in which tiny pixels are arranged in a matrix. The light modulation section 154 sets each of the pixels to a light transmission ratio based on the display image signal provided by the image correction section 152 so that a modulated image is formed in the pixel area. Thereafter, the light modulation section 154 modulates, in the pixel area, the luminous fluxes coming from the light source 153 so that image lights are formed.

The projection section 110 is configured to include a plurality of lenses, and enlarges and projects the image lights formed by the light modulation section 154.

The arm section 20 is configured so as to be able to adjustably extend and contract, and carries therein a motor *My.* When the up and down keys of the operation section 140 are operated, a command comes from the control section 151 so that the motor *My* responsively drives the reflection unit 30 to change the reflection direction for the image lights in such a manner that the image position is changed in the vertical direction.

The reflection unit 30 is configured to include the reflection mirror 31 and a motor *Mx*. The reflection mirror 31 reflects an image light (*Lo*) coming from the projection section 110 toward the screen 120 (reflected light *Li)* so that an image is displayed on the screen 120. When the right and left keys of the operation section 140 are operated, a command comes from the control section 151 so that the motor Mx responsively drives the reflection mirror 31 to change the reflection direction for the image lights in such a manner that the image position is changed in the lateral direction.

Described now is the arm section 20 in detail.

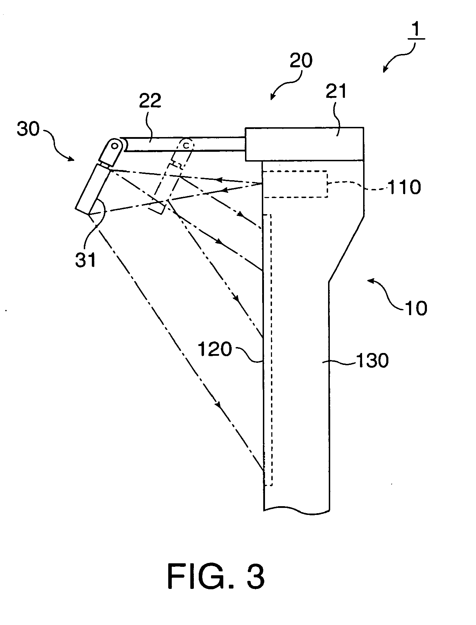

FIG. 3 is a side view of the display device 1.

As shown in FIG. 3, the arm section 20 is configured to include a fixed section 21 and a movable section 22. The fixed section 21 is fixed to the upper end of the chassis 130, and the movable section 22 is inserted into the fixed section 21 to be able to move to slide in the substantially perpendicular direction with respect to the screen 120. By moving to slide the movable section 22, the arm section 20 can be adjustably extended or contracted. The tip end of the movable section 22 is attached with the reflection unit 30, and when the arm section 20 is adjustably extended or contracted, the projection distance can be changed.

In the state that the arm section 20 is extended when the movable section 22 is moved to slide in the direction of moving the reflection unit 30 away from the screen 120 (indicated by solid lines in FIG. 3), the projection distance is increased so that the image is increased in size. On the other hand, in the state that the arm section 20 is contracted when the movable section 22 is moved to slide in the direction of moving the reflection unit 30 closer to the screen 120 (indicated by chain double-dashed lines in FIG. 3), the projection distance is decreased so that the image is reduced in size.

By extending or contracting the arm section 20 as such, the images can be increased or reduced in size. Note here that for size reduction of images, the projection distance is reduced for such a purpose, and there thus is no need for decimating any modulated images of the light modulation section 154 for size reduction of images. This makes it possible to achieve image display with little or no degradation of image quality. Moreover, if the arm section 20 is contracted when the display device 1 is not in use, the degree of protuberance of the arm section 20 can be reduced so that the storage space can be favorably reduced.

Described next is the tip end portion of the movable section 22 and the reflection unit 30 in detail.

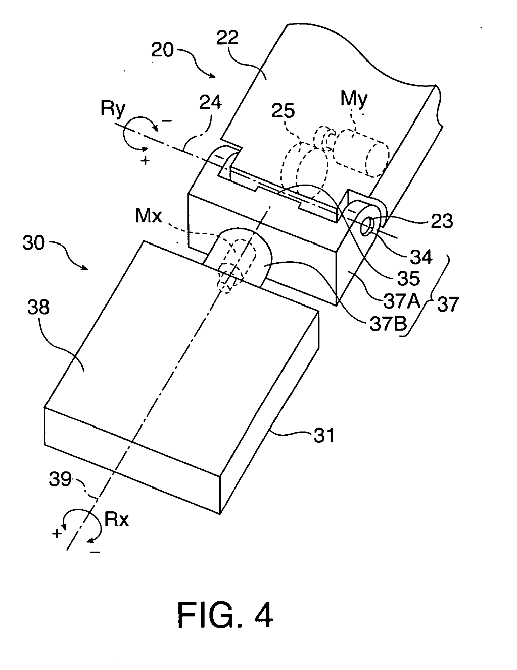

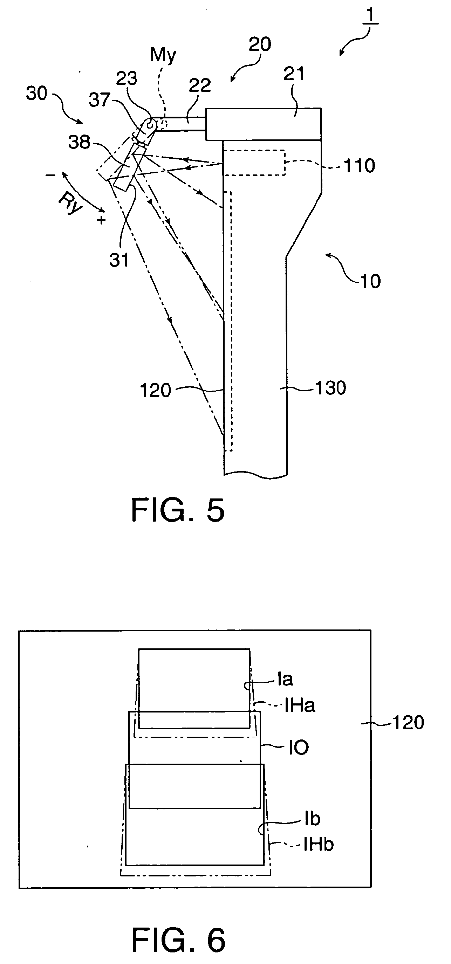

FIG. 4 is a perspective view of the tip end portion of the movable section 22 and the reflection unit 30 viewed from above, and FIG. 5 is a side view of the display device.1.

As shown in FIGS. 4 and 5, the tip end portion of the movable section 22 is formed with a shaft 23 that is substantially horizontal, and whose center axis 24 is substantially parallel to the screen 120. In the area in the vicinity of the tip end of the movable section 22, the motor *My* is attached so that its rotation center axis becomes substantially parallel to the center axis 24. On the side closer to the tip end, a gear 25 is placed to transfer the power of the motor *My.*

The reflection unit 30 is configured to include a support section 37 and a rotation section 38. The support section 37 is provided with the motor Mx, and the rotation section 38 is provided with the reflection mirror 31. The support section 37 is configured to include a square-bracket-shaped section 37A and a cylindrical-shaped section 37B. For the section 37A, a hole 34 is formed to both walls thereof, and on the inner side of the section 37A, a toothed section 35 is formed with a plurality of teeth. The section 37B is so formed that its center axis 39 (center axis of the cylindrical shape) becomes substantially perpendicular to the center axis of the hole 34.

The reflection unit 30 is attached to the movable section 22 by the holes 34 of the support section 37 being engaged with the shaft 23 and by the toothed section 35 being meshed with the gear 25. When the motor *My* is activated, the reflection unit 30 rotates, with respect to the movable section 22, in the directions of *±Ry* about the center axis 24.

By referring to FIG. 5, described now is the operation of reflecting image lights by the reflection unit 30 rotating in the directions of ±*Ry*.

As shown in FIG. 5, when the up key of the operation section 140 is operated, the control section 151 drives the motor *My* based on the key operation so that the reflection unit 30 is rotated in the direction of +*Ry* (indicated by solid lines in FIG. 5). As a result, the reflection unit 30 changes the reflection direction, and changes the image position toward the top. When the down key of the operation section 140 is operated, on the other hand, the control section 151 drives the motor *My* based on the key operation so that the reflection unit 30 is rotated in the direction of *-Ry* (indicated by chain double-dashed lines in FIG. 5). As a result, the reflection unit 30 changes the reflection direction, and changes the image position toward the bottom.

As such, the control section 151 drives the motor *My* based on the operation of the up and down keys to rotate the reflection unit 30 in the directions of ±*Ry*. The reflection unit 30 then changes the reflection direction for image lights for image display on the screen 120 at various positions in the vertical direction.

Such an image position change by changing the reflection direction causes trapezoidal distortion with which images are trapezoidally distorted. In the display device 1 of this embodiment, the projection section 110 is so set that images are displayed in square with no such trapezoidal distortion when the images are displayed by the reflection unit 30 substantially at the center portion of the screen 120, i.e., in the reference state. When the reflection unit 30 is rotated in the directions of ±*Ry* from such a state, the image correction section 152 accordingly performs a correction.

FIG. 6 is a front view of the screen 120.

As shown in FIG. 6, when the reflection unit 30 is in the reference state, an image 10 is displayed at the substantially center portion of the screen 120. When the up key is operated in this state, the control section 151 drives the motor *My* to rotate the reflection unit 30 in the direction of *+Ry.* The control section 151 also issues a command to the image correction section 152 to make it correct a display image signal in such a manner that a modulated image to be formed by the light modulation section 154 will be in the shape that can cancel out any trapezoidal distortion of an image *IHa* in a case of no correction. As a result, the screen 120 displays thereon a square-shaped image *la.* In this specification, square-shaped includes rectangular-shaped.

Similarly, when the down key is operated, the control section 151 drives the motor *My* to rotate the reflection unit 30 in the direction of *-Ry.* The control section 151 also issues a command to the image correction section 152 to make it correct a display image signal in such a manner that a modulated image to be formed by the light modulation section 154 will be in the shape that can cancel out any trapezoidal distortion of an image *IHb* in a case of no correction. As a result, the screen 120 displays thereon a square-shaped image *Ib.*

As such, operating the up and down keys changes the reflection direction of the reflection unit 30, and in response to the key operation, i.e., any change of reflection direction, the image correction section 152 corrects any image distortion. Accordingly, users can view distortion-free images with no need for operation for distortion correction.

Moreover, the reflection unit 30 is so configured that image position can be changed in the lateral direction of the screen 120.

Referring back to FIG. 4, the motor Mx is so attached to the support section 37 that its rotation center axis becomes substantially parallel to the center axis 39 of the section 37B. The rotation section 38 of the reflection unit 30 is formed with a toothed section that is not shown but is with a plurality of teeth. The rotation section 38 is attached to the support section 37 by the toothed section being meshed with a pinion provided to the motor Mx. When the motor Mx operates, the rotation section 38 is rotated, with respect to the support section 37, in the directions of ±*Rx* about the center axis 39. Further, as described above, the center axis 39 is so formed as to be substantially perpendicular to the center axis of the hole 34, and because the hole 34 is being engaged with the axis 23, the center axis 39 and the center axis 24 are configured to be substantially perpendicular to each other.

Herein, described specifically is the operation in which the rotation section 38 is rotated in the directions of ±*Rx*, and the reflection mirror 31 reflects image lights.

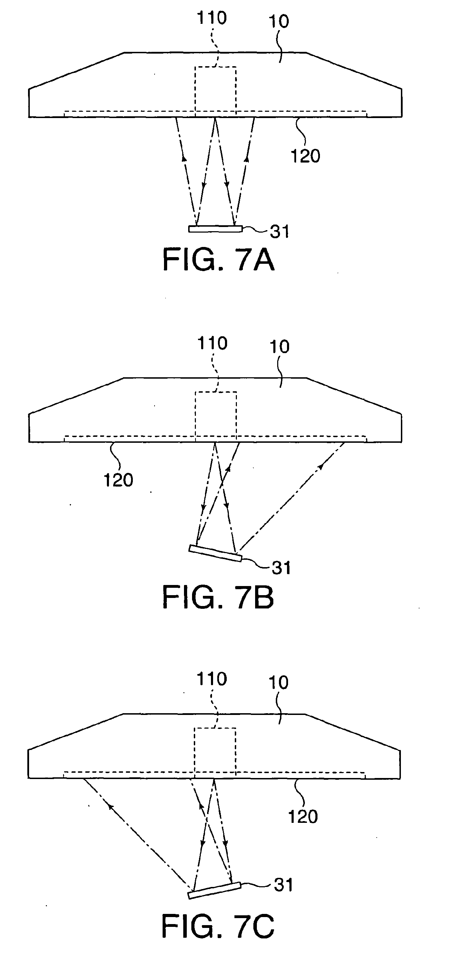

FIGS. 7A to 7C are each a plan view of the display device 1 viewed from the top side, showing the screen unit 10 and the reflection mirror 31 of the reflection unit 30. Herein, FIG. 7A is a diagram showing the state that image lights are being reflected when the reflection unit 30 is in the reference state, FIG. 7B is a diagram showing the state in which the image lights are being reflected toward the right side of the screen 120, and FIG. 7C is a diagram showing the state in which the image lights are being reflected toward the left side of the screen 120.

As shown in FIG. 7A, when the reflection unit 30 is in the reference state, the reflection mirror 31 reflects image lights toward the substantially center portion of the screen 120, thereby displaying images at the substantially center portion of the screen 120. When the right key of the operation section 140 is operated, the control section 151 drives the motor Mx based on the key operation so that the rotation section 38 is rotated in the direction of +Rx (refer to FIG. 4). As a result, as shown in FIG. 7B, the reflection mirror 31 reflects the image lights toward the right side of the screen 120. On the other hand, when the left key of the operation section 140 is operated, the control section 151 drives the motor Mx based on the key operation so that the rotation section 38 is rotated in the direction of -Rx (refer to FIG. 4). As a result, as shown in FIG. 7C, the reflection mirror 31 reflects the image lights toward the left side of the screen 120.

As such, the control section 151 drives the motor Mx based on the operation of the right and left keys for rotating the rotation section 38 in the directions of ±*Rx*. The reflection mirror 31 then changes the reflection direction for the image lights for displaying images on the screen 120 at various positions in the lateral direction.

The image correction section 152 performs an image correction not only in conjunction with the operation of the up and down keys but also in conjunction with the operation of the right and left keys.

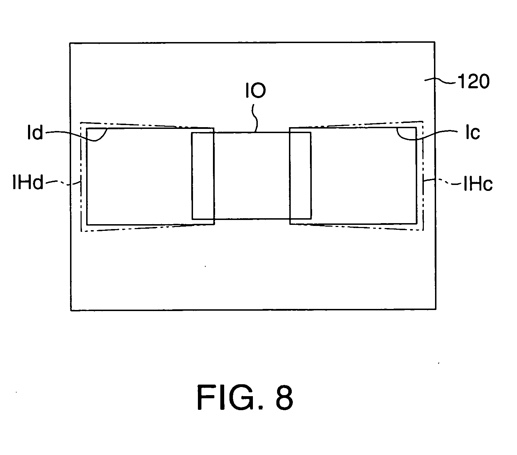

FIG. 8 is a front view of the screen 120 of FIGS. 7A to 7C.

As shown in FIG. 8, when the reflection unit 30 is in the reference state, the image 10 is displayed at the substantially center portion of the screen 120. When the right key is operated in this state, the control section 151 drives the motor Mx to rotate the rotation section 38 in the direction of +Rx (refer to FIG. 4). The control section 151 also issues a command to the image correction section 152 to make it correct a display image signal in such a manner that a modulated image to be formed by the light modulation section 154 will be in the shape that can cancel out any trapezoidal distortion of an image *IHc* in a case of no correction. As a result, the screen 120 displays thereon a square-shaped image *Ic.*

Similarly, when the left key is operated in this state, the control section 151 drives the motor Mx to rotate the rotation section 38 in the direction of -Rx (refer to FIG. 4). The control section 151 also issues a command to the image correction section 152 to make it correct a display image signal in such a manner that a modulated image to be formed by the light modulation section 154 will be in the shape that can cancel out any trapezoidal distortion of an image *IHd* in a case of no correction. As a result, the screen 120 displays thereon a square-shaped image *Id.*

As such, operating the right and left keys changes the lateral direction of reflection by the reflection mirror 31, and in response to the key operation, i.e., any change of reflection direction, the image correction section 152 corrects any image distortion. Accordingly, users can view distortion-free square-shaped images with no need for operation for distortion correction.

As described above, according to the display device 1 of this embodiment, the following effects can be successfully achieved.

1. With the display device 1 of this embodiment, the screen unit 10 is provided with the projection section 110 that may be heavy in weight due to a plurality of lenses for the purpose of enlarging projection. With such a configuration, for placement of the screen unit 10 to be substantially vertical, the arm section 20 can be reduced in weight compared with a configuration where the arm section 20 is provided with the projection section 110 such that the resulting display device may have good stability, and the weight balance may be hardly lost.

2. With the display device 1 of this embodiment, the reflection mirror 31 is disposed between the projection section 110 and the screen 120, thereby being able to lengthen the projection distance with relative ease. With such a configuration, when compared with the case where the arm section 20 is provided with the projection section 110, the lens of the projection section 110 may be smaller in size.

3. With the display device 1 of this embodiment, the arm section 20 can be adjustably extended and contracted so that the distance between the screen 120 and the reflection unit 30 may be changed. Accordingly, this enables the changing of the projection distance, and the image size can be accordingly changed.

4. With the display device 1 of this embodiment, the reflection unit 30 may be changed to alter the reflection direction of reflecting image lights, thereby allowing image display at various positions on the screen 120.

5. With the display device 1 of this embodiment, the image correction section 152 may be provided for correcting any distortion of images, thereby assisting in displaying distortion-suppressed images no matter the reflection direction of the reflection unit 30.
6. With the display device 1 of this embodiment, the reflection unit 30 may be changed to alter the reflection direction in response to a key operation made at the operation section 140, and the image correction section 152 may correct the distortion of images in conjunction with the key operation, i.e., any change made in the reflection direction. Accordingly, users may view distortion-free images with little or no need for operation for distortion correction.

### Second Embodiment

Described next is the display device 1 of a second embodiment by referring to the accompanying drawings.

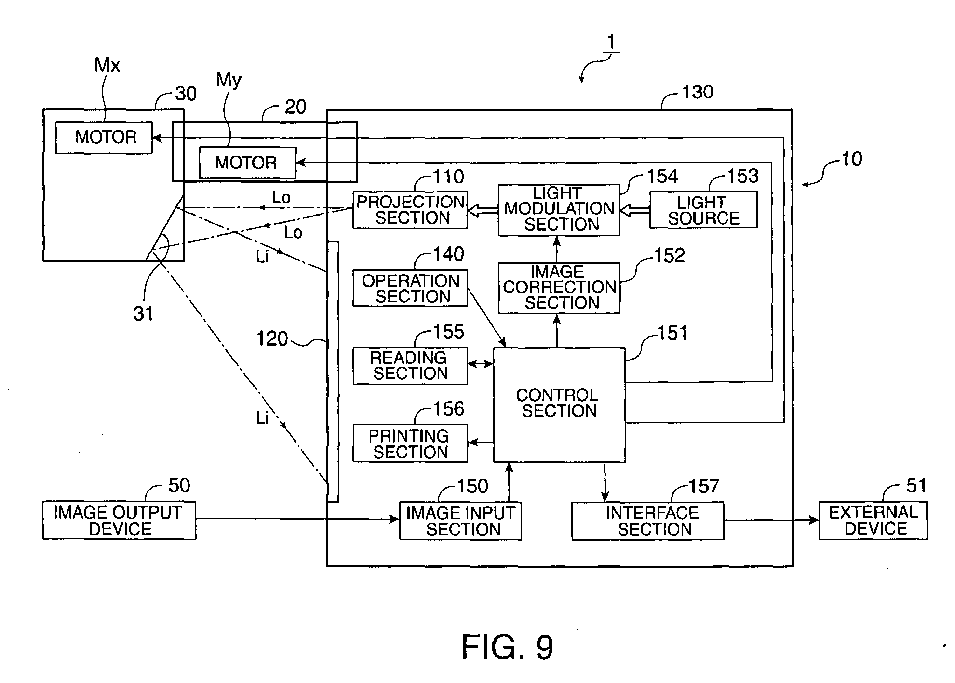

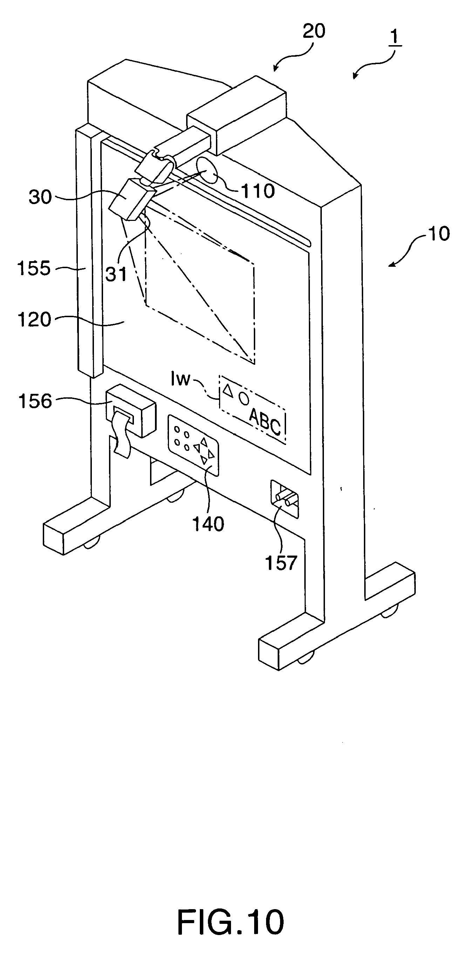

FIG. 9 is a block diagram for illustrating the schematic configuration of the display device 1 of this embodiment, and FIG. 10 is a diagram showing the outer appearance thereof.

As shown in FIGS. 9 and 10, the display device 1 of the embodiment is configured to include, in the screen unit 10 of the first embodiment, a reading section 155, a printing section 156, and an interface section 157. The screen 120 is configured by a white board. The operation section 140 is configured to include a reading key (not shown) for operating the reading section 155, and a printing key (not shown) for operating the printing section 156.

As it is configured by a white board, the screen 120 is available not only for display of images being projection results from the projection section 110 but also for pen-based writing and erasing of characters, graphics, and others using a marker pen and an eraser, for example.

The reading section 155 is disposed on the front surface side of the screen 120, and when the reading key or the printing key of the operation section 140 is operated, a command comes from the control section 151. In response to the command, the reading section 155 reads a written image *Iw* written on the screen 120 while moving in the direction from left to right. Alternatively, the read image *Iw* may be combined with projection image data from the control section or correction section. The thus read image is forwarded to the control section 151 as an image signal.

When the reading key is operated, the control section 151 stores the image signal provided by the reading section 155, and when the printing key is operated, processes the image signal provided by the reading section 155 for output to the printing section 156.

The printing section 156 is disposed on the lower left side of the screen 120, and serves as an output section that outputs images read by the reading section 155. When a command comes from the control section 151, the printing section 156 responsively prints, for output, images based on the image signal being the processing result by the control section 151.

The interface section 157 is configured to include a connection terminal for establishing a connection with an external device 51 such as a PC (Personal Computer) via a cable. Needless to say, in this and other embodiments the connection may be wireless. The interface section 157 is disposed on the lower right side of the screen 120, and also serves as an output section for outputting images read by the reading section 155. When the interface section 157 is connected with the external device 51, the image signal stored in the control section 151 becomes available for reading from the external device 51.

As described in the foregoing, with the display device 1 of this embodiment, the following effects can be successfully achieved in addition to the effects achieved in the first embodiment.

1. With the display device 1 of this embodiment, the screen 120 may be a white board that is available for writing and erasing of characters, graphics, and others using a marker pen and an eraser, for example. It means that the screen 120 may be available not only for display of projection images but also for writing of details of conferences and meetings.

2. With the display device 1 of this embodiment, the screen unit 10 may be provided with the reading section 155 configured for reading a written image *Iw* written by a marker pen or others on the screen 120, and the printing section 156 configured to output the image read by the reading section 155. With such a configuration, the written image *Iw* may be printed and stored with no need for copying thereof.

3. With the display device 1 of this embodiment, the screen unit 10 may be provided with the interface section 157, and configured to transfer the written image *Iw* to the external device 51 such as a PC (Personal Computer). As such, the application purposes may be extended for storage of the written image *Iw* and image display to a large number of people, for example.

### Third Embodiment

Described next is the display device 1 of a third embodiment by referring to the accompanying drawings.

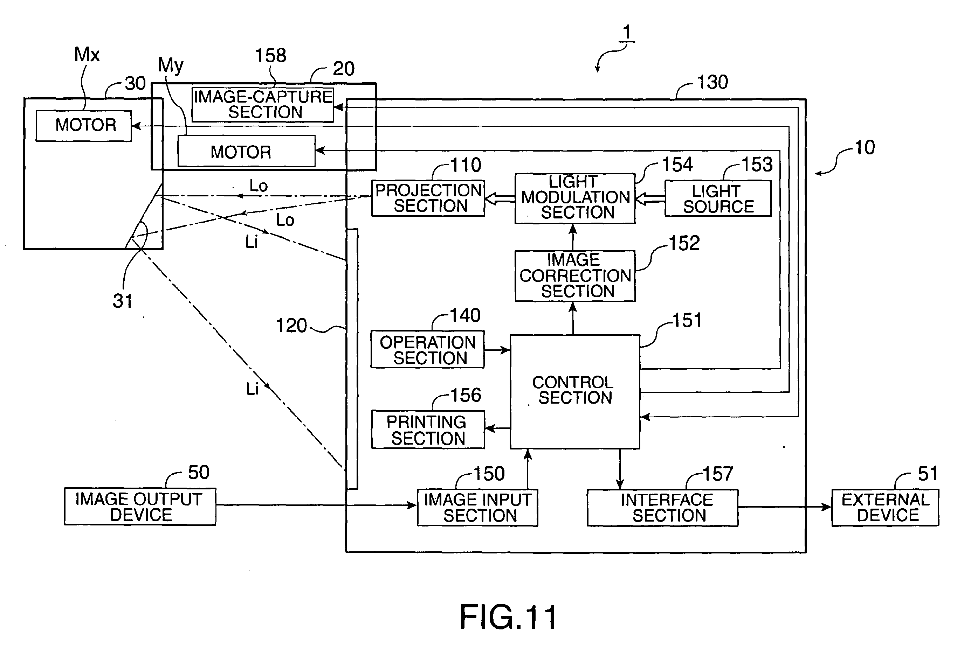

FIG. 11 is a block diagram for illustrating the schematic configuration of the display device 1 of this embodiment.

As shown in FIG. 11, the display device 1 of this embodiment is configured to include, as an alternative to the reading section 155 in the screen unit 10 of the second embodiment, an image-capture section 158 in the arm section 20. The operation section 140 is provided with, as an alternative to the reading key, an image-capture key (not shown) for operating the image-capture section 158.

When the image-capture key or the printing key is operated, a command comes from the control section 151, and the image-capture section 158 responsively captures an image of the screen 120 in its entirety. The resulting image is forwarded to the control section 151 as an image signal.

When the image-capture key is operated, the control section 151 stores the image signal provided by the image-capture section 158, and when the printing key is operated, the image signal provided by the image-capture section 158 is processed for output to the printing section 156.

As described in the foregoing, with the display device 1 of this embodiment, the following effects may be successfully achieved.

With the display device 1 of this embodiment, the arm section 20 is provided with the image-capture section 158 that may capture an image of the screen 120 in its entirety. As such, a written image and a display image may be captured all at once.

### Modified Example

Note here that the embodiments above may be modified as below.

In the above embodiments, the arm section 20 is configured so as to be manually extended and contracted. Alternatively, the fixed section 21 may be provided with driving means, e.g., motor, for moving the movable section 22 to slide, and the movable section 22 may be moved to slide by activating the driving means based on any key operation.

In the above embodiments, the arm section 20 is configured so as to be adjustably extended and contracted in response to when the movable section 22 is moved to slide by being inserted into the fixed section 21. Alternatively, a plurality of movable sections and a fixed section may be configured like a rod antenna, and the arm section 20 may be adjustably extended and contracted by moving the movable sections to slide. If this is the configuration, the degree of protuberance of the arm section 20 may be further reduced for housing of the display device 1. Also in the above embodiments, the fixed section 21 of the arm section 20 is fixed to the upper end of the chassis 130. Alternatively, the fixed section 21 may be configured so as to be able to move with respect to the chassis 130, e.g., the fixed section 21 may be configured so as to be able to rotate to be substantially parallel to the screen 120. With this being the case, the degree of protuberance of the arm section 20 can be reduced to almost zero by making the arm section 20 to be substantially parallel to the screen 120 through rotation thereof, thereby reducing the storage space to a further degree.

Moreover, the arm section 20 may be attached to the upper portion of the chassis 130, and is allowed to adjustably extend and contract when the movable section 22 is moved to slide. Alternatively, the arm section 20 may be configured so as to be able to extend and contract like a pantograph, or may be extended from one side surface or the bottom of the chassis 130. Similarly, the projection section may be provided at a side area or a bottom area of the chassis 130/screen unit 10. The configuration of the arm section 20 is not restricted as long as it allows placement of the reflection unit 30 in such a manner that image lights from the projection section 110 are projected on the screen 120.

In the embodiments above, images may be changed in size by extending or contracting the arm section 20. Alternatively, the projection section 110 may be provided with a lens component for increasing and reducing the image size and a zoom operation section, and through operation of the zoom operation section, the images may be increased or reduced in size.

Also in the embodiments above, images may be changed in size by extending or contracting the arm section 20. Alternatively, modulated images of the light modulation section 154 may be additionally processed for increasing and reducing the image size. This may enable an increase or reduce the size of the images to a further degree.

Also in the embodiments above, the reflection unit 30 is configured so as to be able to reflect image lights onto the screen 120. Alternatively, the reflection unit 30 may be so configured as to be able to reflect image lights toward the outside of the screen 120. This configuration may allow image projection not only onto the screen but also onto room walls and desks, for example.

Also in the embodiments above, the reflection unit 30 is changed in reflection direction when it is driven by the motors Mx and *My.* This is surely not restrictive, and the reflection direction may be changed manually.

The reflection mirror 31 of the above embodiments may have a reflection surface of convex shape.

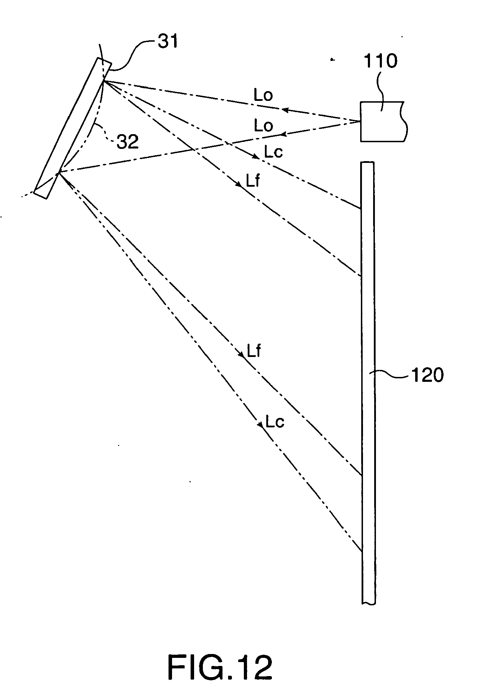

FIG. 12 is a schematic diagram for comparison in terms of an optical path for reflection of image lights between the reflection mirror 31 having a flat reflection surface and a reflection mirror 32 having a concave reflection surface.

As shown in FIG. 12, an image light (Lc) reflected by the reflection mirror 32 has a wide range of reflection compared with an image light (*Lf*) reflected by the reflection mirror 31. Accordingly, an image as a result of reflection by the reflection mirror 32 whose reflection surface is of convex shape will be larger in size compared with an image as a result of reflection by the reflection mirror 31 whose reflection surface is flat. Accordingly, if images are of a size, using the reflection mirror 32 whose reflection surface is of convex shape can shorten the projection distance. This facilitates the reduction of the length of the arm section 20 so that the degree of protrusion of the arm section 20 can be reduced with respect to the screen 120. Moreover, when images are of a size, if the projection distance remains the same, the magnification of the projection section 110 can be reduced, and may simplify the lens configuration and reduce the lens size in the projection section 110.

Alternatively, the reflection surface of the reflection mirror 31 of the above embodiments may be aspheric with which image lights are reflected with a higher magnification than those with a flat surface, and the resulting images suffer from less distortion.

In the embodiments above, the chassis 130 is formed with the leg sections 131 at its lower portion, and below these leg sections 131, the rollers 132 are attached so that the display device 1 can be freely moved for placement. This is surely not restrictive, as alternatives to the leg sections 131 and the rollers 132, the screen unit 10 may be fixed to the room walls or others.

In the second embodiment, the reading section 155 is disposed on the front surface side of the screen 120, and reads the written image *Iw* written on the screen 120 while moving in the direction from left to right. Alternatively, the reading section 155 may be fixed and disposed on the rear surface side of the screen 120, the screen 120 may be rolled from the front surface to the rear surface, and the reading section 155 may read the written image *lw* while the screen 120 is being moved.

In the second and third embodiments above, alternatively, the screen 120 may be configured by a white board whose both surfaces are available for writing, and this screen 120 may be attached to the chassis 130 to be able to be flipped over for use.

In the embodiments above, the light modulation section 154 is a liquid crystal panel. This is surely not restrictive, and the light modulation section 154 may be configured by using a reflective liquid crystal panel or a device with a micromirror, for example.

In the embodiments above, the light source 153 is exemplified by the ultra-high-pressure mercury lamp. Alternatively, the light source 153 may be a fixed light source such as any other discharge lamp and an LED (Light-Emitting Diode).

## Claims

1. A display device, comprising:
a screen unit having a screen and a projection section that projects an image light;
an arm section attached to the screen unit so as to protrude therefrom; and
a reflection unit attached to the arm section, the reflection unit having a reflection mirror that reflects the image light projected by the projection section toward the screen.

2. The display device according to claim 1, wherein the reflection unit is configured to be adjustable to alter a reflection direction of the image light.

3. The display device according to claim 1 or claim 2, further comprising an image correction section configured to correct distortion of an image displayed on the screen.

4. The display device according to claim 3, wherein the image correction section corrects the distortion of the image in conjunction with the altering of the reflection direction by the reflection unit.

5. The display device according to any one of the preceding claims, wherein the arm section is configured to adjustably extend or contract with respect to a position of the screen.

6. The display device according to any one of the preceding claims, wherein the reflection mirror has a reflection surface having a convex shape.

7. The display device according to any one of the preceding claims, wherein
the screen is a white board configured to allow pen-based writing and erasing of the writing.

8. The display device according to claim 7, wherein the screen unit is provided with a reading section configured to read an image written on the screen, and an output section configured to output the image read by the reading section.

9. The display device according to any one of the preceding claims, wherein the arm section comprises an image-capture section configured to capture an image displayed on the screen, and the screen unit further comprises an output section configured to output the image captured by the image-capture section.

10. The display device according to claim 8 or claim 9, wherein the output section includes a printing section configured to print the captured image on paper.

11. The display device according to any one of claims 8 to 10, wherein the output section includes an interface section configured to connect to an external device.
